Europäisches Patentamt

European Patent Office

Office européen des brevets

(11) Veröffentlichungsnummer: **0 450 343 A1**

# EUROPÄISCHE PATENTANMELDUNG

(21) Anmeldenummer: **91103618.4**

(51) Int. Cl.⁵: **A01G 9/02**

(22) Anmeldetag: **08.03.91**

(30) Priorität: **21.03.90 DE 9003334 U**

(43) Veröffentlichungstag der Anmeldung:
**09.10.91 Patentblatt  91/41**

(84) Benannte Vertragsstaaten:
**AT BE CH DE DK ES FR GB GR IT LI LU NL SE**

(71) Anmelder: **Baumjohann, Adolf**
**Inninger Strasse 23**
**W-8900 Augsburg 21(DE)**

Anmelder: **Protzmann, Robert**
**Fuchssiedlung 11**
**W-8900 Augsburg 22(DE)**

Anmelder: **Gollwitzer, Anton**
**Hauptstrasse 24**
**W-8901 Affing-Aulzhausen(DE)**

(72) Erfinder: **Baumjohann, Adolf**
**Inninger Strasse 23**
**W-8900 Augsburg 21(DE)**
Erfinder: **Protzmann, Robert**
**Fuchssiedlung 11**
**W-8900 Augsburg 22(DE)**
Erfinder: **Gollwitzer, Anton**
**Hauptstrasse 24**
**W-8901 Affing-Aulzhausen(DE)**

(74) Vertreter: **Prietsch, Reiner, Dipl.-Ing. et al**
**Patentanwälte Dipl.-Ing. Dipl. oec. publ. D.**
**Lewinsky, Dipl.-Ing. Reiner Prietsch**
**Gotthardstrasse 81**
**W-8000 München 21(DE)**

(54) **Pflanzschale.**

(57) Eine Pflanzschale aus einem längs einer Umfangslinie geteilten Altreifen kann sowohl freistehend
als auch für die Flachdachbegrünung verwendet
werden, wenn sie dadurch wasserdicht und durchwurzlungsfest ausgebildet wird, daß sie einen auf die
verbliebene Seitenflanke (5) aufvulkanisierten Boden
(6) aus Reifengummi erhält, der unterseitig mit Stollen (7) versehen ist.

FIG. 4

Die Erfindung betrifft eine Pflanzschale aus einem längs einer Umfangslinie geteilten Altreifen.

Eine derartige Pflanzschale ist aus der DE-OS 38 29 615 bekannt. Sie wird durch Halbierung von Altreifen längs einer Umfangslinie gewonnen. Mehrere solcher Pflanzschalen können zur Bildung einer Matte aneinandergelegt und in geeigneter Weise miteinander verbunden werden. Die Matten lassen sich nach Verfüllung mit Erdreich zur Bewehrung waagrechter oder geneigter Flächen, z.B. Böschungen, verwenden und begrünen. Neben dem Vorteil, Altreifen auf diese Weise einer umweltfreundlichen Wiederverwendung zuzuführen, ist die bekannte Pflanzschale materialbedingt verrottungsfest, frost- und bruchsicher sowie schwer belastbar.

Der Erfindung liegt die Aufgabe zugrunde, die Pflanzschale der einleitend angegebenen Gattung dahingehend zu verbessern, daß sie sowohl freistehend verwendet werden kann als auch zusammen mit weiteren, gleichartigen Pflanzschalen für die Dachbegrünung, insbesondere die Flachdachbegrünung, verwendet werden kann.

Diese Aufgabe ist erfindungsgemäß dadurch gelöst, daß mit der verbliebenen Seitenflanke des Altreifens ein wasserundurchlässiger Boden aus einem weichmacherfreien Elastomeren wasserdicht verbunden ist, der unterseitig mit Stollen als Abstandhalter zur Aufstandsfläche versehen ist.

Die Pflanzschale wird auf diese Weise zu einem durchwurzelungsfesten Wasservorratsbehälter, der äußerst preiswert herstellbar und daher universell einsetzbar ist. Hierdurch ist eine wesentliche Voraussetzung für eine Verringerung des Problems der Entsorgung von Altreifen erfüllt.

Des weiteren kann die vorgeschlagene Pflanzschale mit den in der gummiverarbeitenden Industrie, speziell der Reifenindustrie, allgemein üblichen und vorhandenen Vorrichtungen und nach den dort geläufigen Verfahren hergestellt werden, vor allem, wenn die wasserdichte Verbindung des Bodens mit der verbliebenen Seitenflanke des (ehemaligen) Altreifens durch Vulkanisieren erfolgt.

Der Boden kann aus einer der vor allem in der Reifenindustrie bekannten Gummi- bzw. Kautschuksorten, z.B. EPDM, CSM, NR, usw. bestehen. Hierbei kann es sich um Neuware in Form von Bahnen oder Platten handeln. Sofern die Herstellung von Pflanzschalen nach dem vorliegenden Vorschlag einem Reifenrunderneuerer-Betrieb angegliedert ist, kann das dort anfallende Altgummigranulat ebenfalls zu dem Boden der Pflanzschale verarbeitet werden. Hierbei ist abzuwägen zwischen dem gewonnen Vorteil der Wiederverwendung (anstelle der Entsorgung) des Altgummigranulates und dem zur Erzielung der Wasserdichtigkeit notwendigen Aufwand.

Die als Abstandhalter dienenden Stollen können ebenfalls wahlweise aus den genannten Materialien bestehen und einzeln auf den Boden aufgeklebt werden. Vorteilhafter ist es jedoch, den Boden in einem Arbeitsgang mit den Stollen einstückig herzustellen, z.B. in Form einer entsprechenden Profilmatte. Statt vorgefertigte Bahnenware zu verwenden, bei deren Zuschnitt unvermeidbar Reststücke und Verschnitt anfallen, die entsorgt werden müssen, ist es am besten, an die verbliebene Seitenflanke des ehemaligen Altreifens den Boden einschließlich der Stollen in einem einzigen Arbeitsgang anzuvulkanisieren.

Sofern die Pflanzschale als freistehender Pflanzkübel verwendet werden soll, empfiehlt es sich, ihre Umfangsfläche zur Begrenzung des Wasserstandes mit mindestens einer Wasserüberlaufbohrung zu versehen.

Die Erfindung wird nachfolgend anhand der Ausführungsbeispiele veranschaulichenden Zeichnung erläutert. Es zeigt:

Fig. 1     einen Altreifen im Querschnitt

Fig. 2     eine hieraus hergestellte Pflanzschale im Querschnitt,

Fig. 3     eine Unteransicht der Pflanzschale nach Fig. 2,

Fig. 4     eine einzeln aufgestellte, begrünte Pflanzschale im Querschnitt,

Fig. 5     einen Schnitt durch eine unter Verwendung von mehreren Pflanzschalen aufgebaute Flachdachbegrünung und

Fig. 6     eine Skizze der Anordnung der Pflanzschalen im Fall der Fig. 5.

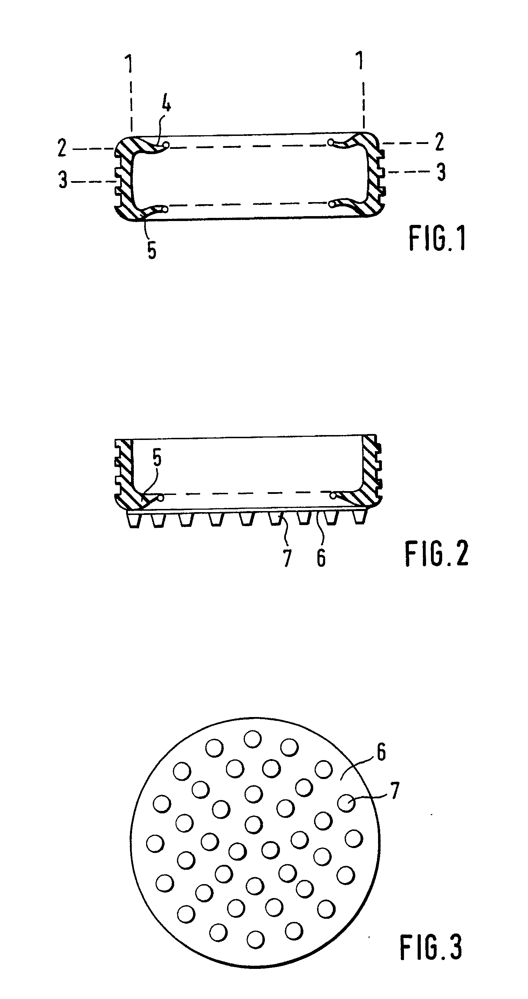

In Fig. 1 bezeichnen die gestrichelten Linien 1-1 bzw. 2-2 und 3-3 die Lage unterschiedlicher Umfangslinien bzw. Trennebenen, längs derer der dargestellte Altreifen in Abhängigkeit von der gewünschten Höhe bzw. dem gewünschten Volumen der herzustellenden Pflanzschale durchgeschnitten wird. In jedem Fall fällt die obere Seitenflanke 4 weg, während die untere Seitenflanke 5 erhalten bleibt.

Auf diese untere Seitenflanke 5 wird gemäß Fig. 2 ein Boden 6 aus einem weichmacherfreien Elastomeren z.B. aufvulkanisiert. Der Boden 6 hat unterseitig Stollen 7, die wahlweise mit dem Boden 6 einstückig hergestellt oder nachträglich auf diesen aufgeklebt sind. Fig. 3 zeigt die zugehörige Unteransicht. Die Stollen 7 dienen zur Schaffung von Wasserablaufkanälen unter der Pflanzschale und ermöglichen außerdem eine weitgehend ungehinderte Wasserdampfdiffusion.

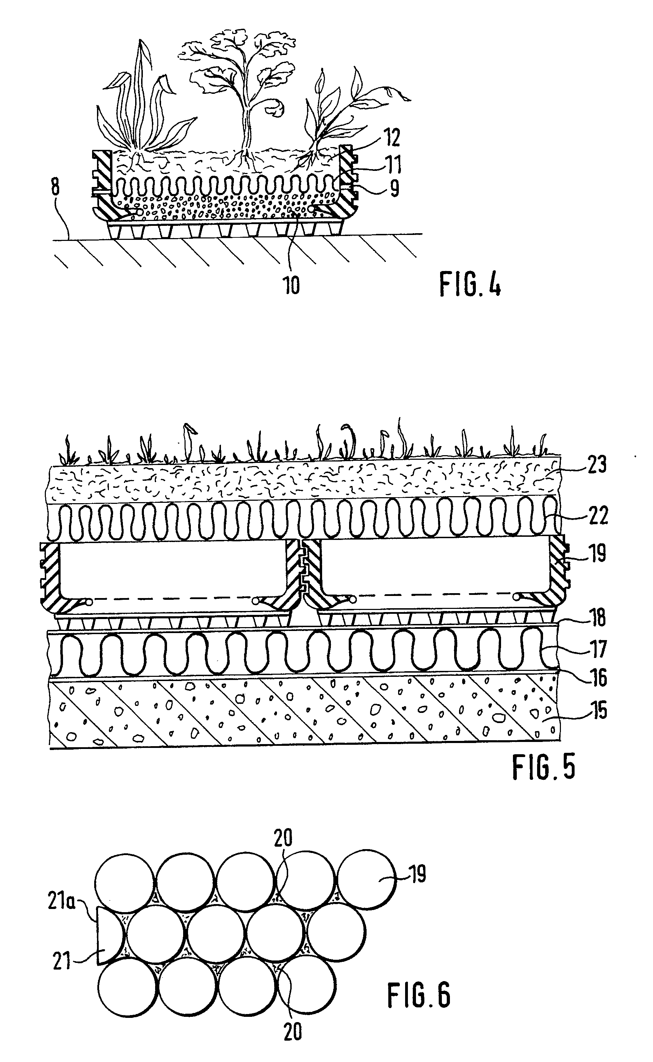

Wird die Pflanzschale entsprechend Fig. 4 freistehend z.B. auf einem Terrassen- oder Balkonboden 8 verwendet, so hat sie in ihrer Umfangsfläche wenigstens eine Wasserüberlaufbohrung 9. Bis zur Höhe dieser Wasserüberlaufbohrung 9 ist die Pflanzschale z.B. mit Kies, Blähton, Steinwolle oder einem anderen zweckentsprechenden Material gefüllt. Diese Schüttung ist mit 10 bezeichnet. Hierauf folgt eine Filter- und Durchwurzelungsschicht 11. Der verbleibende Raum ist mit Humus 12 oder einem anderen geeigneten Substrat gefüllt.

Wird die Pflanzschale gemäß den Figuren 5 und 6 zur Flachdachbegrünung verwenden, so entfällt die Wasserüberlaufbohrung 9. Für den Aufbau und die Schichtenfolge einer Flachdachbegrünung gibt es unterschiedliche Systeme. Die Fig. 5 ist daher nur beispielhaft aufzufassen. Auf die tragende Decke 15, z.B. eine Betondecke, folgt eine Dampfsperre 16, auf diese eine Wärmedämmschicht 17. Auf diese wiederum ist eine durchwurzelungsfeste Dachabdichtung 18 aufgelegt, auf der eine entsprechende Anzahl von Pflanzschalen 19 aufstehen, vorzugsweise in der in Fig. 6 skizzierten dichtesten Packung, wobei die verbleibenden Zwischenräume z.B. mit Steinwolle verfüllt und, wie bei 20 angedeutet, durch Formstücke aus Altgummigranulat abgedeckt sein können. Um zu große Lücken an den (Quer-)Rändern zu vermeiden, können dort auch spezielle, halbierte Pflanzschalen 21 angeordnet werden, die durch eine entsprechende Seitenwand 21a als geschlossene Behälter ausgebildet sind. Der gesamte Innenraum der Pflanzschalen wird bis zur Oberkante mit Kies, Blähton oder dergl. verfüllt (in Fig. 5 nicht gezeichnet). Es folgt eine Filter-, Drainage- und Durchwurzelungsschicht 22, auf welche eine Schicht 23 aus Humus oder einem anderen Substrat aufgebracht wird.

**Patentansprüche**

1. Pflanzschale aus einem längs einer Umfangslinie geteilten Altreifen, dadurch gekennzeichnet, daß mit der verbliebenen Seitenflanke (5) ein wasserundurchlässiger Boden (6) aus einem weichmacherfreien Elastomeren wasserdicht verbunden ist, der unterseitig mit Stollen (7) als Abstandshalter zur Aufstandsfläche versehen ist.

2. Pflanzschale nach Anspruch 1, dadurch gekennzeichnet, daß der Boden (6) mit der Seitenflanke (5) vulkanisiert oder verschweißt oder verklebt ist.

3. Pflanzschale nach Anspruch 1 ode 2, dadurch gekennzeichnet, daß der Boden (6) aus einer der für die Reifenherstellung verwendeten Reifengummisorten besteht.

4. Pflanzschale nach Anspruch 1 oder 2, dadurch gekennzeichnet, daß der Boden (6) aus wasserdicht gebundenem Altgummigranulat besteht.

5. Pflanzschale nach einem der Ansprüche 1 bis 4, dadurch gekennzeichnet, daß der Boden (6) mit den Stollen (7) einstückig ist.

6. Pflanzschale nach einem der Ansprüche 1 bis 5, dadurch gekennzeichnet, daß ihre Umfangsfläche mit mindestens einer Wasserüberlaufbohrung (9) versehen ist.

FIG.1

FIG.2

FIG.3

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-1 950 004  (J. TROGEMANN)<br>* das ganze Dokument * | 1-6 | A 01 G 9/02· |
| A | DE-A-3 516 499  (M. BOCK)<br>* Zusammenfassung; Anspruch; Abbildungen 1-3 * | 1,3,6 | |
| A | DE-A-3 718 288  (M. HARTENBACH)<br>* Spalte 4, Zeilen 5-14; Abbildungen 1,2 * | 1 | |
| A | BE-A-6 739 17  (F. POCACHARD)<br>* Seite 2, Zeilen 4-14,26,27; Abbildungen 1-3 * | 1,5,6 | |
| D,A | DE-A-3 829 615  (J. UNTERLAENDER)<br>* Zusammenfassung; Abbildungen 1,2 * | 1 | |

RECHERCHIERTE SACHGEBIETE (Int. Cl.5)

A 01 G

Der vorliegende Recherchenbericht wurde für alle Patentansprüche erstellt

| Recherchenort | Abschlußdatum der Recherche | Prüfer |
|---|---|---|
| Berlin | 05 Juli 91 | MARTIN DEL RIO A |